**Europäisches Patentamt**

**European Patent Office**

**Office européen des brevets**

(19)

(11) Veröffentlichungsnummer: **0 075 133**
B1

(12)                    **EUROPÄISCHE PATENTSCHRIFT**

(45) Veröffentlichungstag der Patentschrift:
22.05.85

(51) Int. Cl.⁴: **A 01 C 5/06**, A 01 B 49/06

(21) Anmeldenummer: **82107857.3**

(22) Anmeldetag: **26.08.82**

(54) **Breitsaatvorrichtung.**

(30) Priorität: **16.09.81 DE 3136706**

(43) Veröffentlichungstag der Anmeldung:
**30.03.83 Patentblatt 83/13**

(45) Bekanntmachung des Hinweises auf die Patenterteilung:
**22.05.85 Patentblatt 85/21**

(84) Benannte Vertragsstaaten:
**AT BE CH DE FR GB IT LI LU NL SE**

(56) Entgegenhaltungen:
**DE - A - 2 718 921**
**DE - C - 3 034 410**
**FR - A - 2 284 264**
**FR - A - 2 334 281**
**FR - A - 2 340 677**
**GB - A - 1 603 106**
**US - A - 3 895 589**

(73) Patentinhaber: **von Bremen, Oltmann, Am Kirchdeich 18, D-2800 Bremen 66 (DE)**

(72) Erfinder: **von Bremen, Oltmann, Am Kirchdeich 18, D-2800 Bremen 66 (DE)**

(74) Vertreter: **Goddar, Heinz J., Dr. et al, FORRESTER & BOEHMERT Widenmayerstrasse 4/I, D-8000 München 22 (DE)**

ACTORUM AG

## Beschreibung

Die Erfindung betrifft eine Breitsaatvorrichtung mit einem sich über die gesamte Vorrichtungsbreite erstreckenden, einen Erdstrom erzeugenden, in Fahrtrichtung rotierenden Bodenbearbeitungswerkzeug mit horizontaler Drehachse, in dessen abfliessenden Erdstrom auf einer sich senkrecht zur Särichtung erstreckenden Achse nebeneinander angeordnete Breitsaatelemente nicht bodenuntergreifend hineinragen, die vorrichtungsfest einstellbar sind.

Bekanntlich können Getreidekörner in Reihen, in Bändern oder breitverteilt gesät werden. Die Reihensaat erfolgt in der Regel durch Drillscharen (z.B. Säbelscharen) oder auch durch Ablegen in von Packerringen erzeugte Rillen. Die Nachteile derartiger Reihensaatverfahren sind hinlänglich bekannt (s. z. B. „ Neuzeitliche Bestelltechnik", zusammengestellt von Dr. Albrecht Achilles, KTBL-Schriften-Vertrieb im Landwirtschaftsverlag GmbH Münster-Hiltrup, 1977).

Eine günstigere Kornverteilung auf der zu besäenden Bodenfläche erlaubt die bekannte Bandsaat, bei der die Körner in parallelverlaufenden Bändern abgelegt werden. Ein bekanntes Bandsaatverfahren besteht z. B. darin, dass sogenannte Gänsefussschare, mit einer typischen Auslaufbreite von etwa 7,5 cm, durch den Boden gezogen werden. Die Gänsefussschare sind dabei aus verschiedenen Gründen so angeordnet, dass die besäten Bänder bzw. Streifen nicht genau aneinandergrenzen, zwischen den besäten Bändern also kornfreie Bodenstreifen verbleiben. Ein anderes bekanntes Bandsaatverfahren besteht darin, die Körner direkt in den abfliessenden Erdstrom eines stromerzeugenden Gerätes mittels Rohren abzulegen, die mit ihren Endöffnungen in den abfliessenden Erdstrom ragen. Die dabei zu erzielende Bandbreite entspricht etwa dem Innendurchmesser des Samenleitungsrohres, typischerweise etwa 3 cm. Die Zufuhr der Samen in die Rohre kann dabei sowohl pneumatisch als auch schwerkraftgespeist (im freien Fall) erfolgen. Ein Nachteil dieser Kornablage durch Rohre besteht darin, dass die Kornverteilung auf der besäten Fläche nicht streng homogen, sondern in der Rohrmitte gehäuft ist. In der Mitte des besäten Bandes wird also eine grössere Kornkonzentration zu verzeichnen sein als an den Rändern des Saatbandes. Auch hat dieses Verfahren den Nachteil, dass der Rohrdurchmesser nicht beliebig vergrösserbar ist, so dass die erzielte Bandbreite im Verhältnis zum nichtbesäten Abstand der Saatbänder relativ klein bleibt, die Gesamtverteilung der Körner über die Bodenflächen also noch relativ weit von der idealen Breitsaat entfernt ist, bei der die Körner völlig statistisch gemäss einer Poisson-Verteilung im Boden liegen.

Die nicht vorveröffentlichte DE-C Nr. 3130910 schlägt bereits eine Breitsaatvorrichtung mit ersten Gänsefussscharen vor, die auf einer sich senkrecht zur Särichtung erstreckenden ersten Achse derart nebeneinander angeordnet sind, dass zwischen ihnen lichte Abstände sind, wobei zweite Gänsefussschare auf einer sich parallel mit Abstand hinter der ersten Achse erstreckenden zweiten Achse in Särichtung zwischen den ersten Gänsefussscharen angeordnet sind und jeweils eine pneumatische oder schwerkraftgespeiste Kornzuführung vorgesehen ist. Dabei ist in Särichtung vor der ersten Achse ein sich über die gesamte Vorrichtungsbreite erstreckendes, in Fahrtrichtung rotierendes Bodenbearbeitungswerkzeug mit horizontaler Drehachse zum Erzeugen eines Erdstromes angeordnet. Die ersten Gänsefussschare sind vorrichtungsfest und sowohl hinsichtlich ihrer Höhe als auch hinsichtlich ihres Anstellwinkels derart stufenlos einstellbar angeordnet, dass sie nicht bodenuntergreifend in den von dem rotierenden Bodenbearbeitungswerkzeug abfliessenden Erdstrom ragen. Die vorgenannte Vorrichtung ist jedoch relativ aufwendig: Es werden dort Gänsefussschare jeweils auf zwei Achsen nebeneinander montiert, wobei die Achsen in Särichtung unter Abstand angeordnet sind. Zudem sind dabei je nach den Bodenverhältnissen verschiedene Zusatzeinrichtungen empfehlenswert oder sogar erforderlich, wie Bodenlockerungsschare, Zustreicher usw. Diese relativ komplizierte und aufwendige Kombination von·Gänsefussscharen auf in Särichtung zueinander versetzten Achsen bedingt relativ aufwendige und teure Maschinen.

Aus der FR-A Nr. 2334281 ist bereits eine Vorrichtung der eingangs genannten Art bekannt, bei der die Breitsaatelemente als Rohrsäelemente ausgebildet sind. Hierbei tritt der bereits weiter oben in allgemeiner Form diskutierte Nachteil einer Körnerablage durch Rohre auf, der darin besteht, dass die Kornverteilung auf der besäten Fläche nicht streng homogen erfolgt, sondern in der Mitte des besäten Bandes eine grössere Kornkonzentration zu verzeichnen ist als an den Rändern des Saatbandes. Auch ist der Rohrdurchmesser, wie bereits dargelegt, nicht beliebig vergrösserbar, so dass die erzielte Bandbreite im Verhältnis zum nichtbesäten Abstand der Saatbänder relativ klein bleibt, die Gesamtverteilung der Körner also noch relativ deutlich von derjenigen einer idealen Breitsaat entfernt ist.

Der Erfindung liegt die Aufgabe zugrunde, eine Vorrichtung der eingangs genannten Art zu schaffen, welche mit einfachen Mitteln eine gleichmässigere Breitenverteilung und Tiefenablage auch auf unvorbereiteten Böden gewährleistet.

Erfindungsgemäss wird diese Aufgabe dadurch gelöst, dass die Breitsaatelemente am bodenseitigen Ende als Flachtrichter ausgebildet sind, dass benachbarte Flachtrichter einen lichten Abstand im Bereich von 0 bis 10 cm haben, dass die Auslaufbreite der Flachtrichter im Bereich von 5 bis 25 cm liegt, dass die obere Deckplatte der Flachtrichter deren untere Bodenplatte in Richtung des Körnerauslaufes überragt, dass die untere Bodenplatte der Flachtrichter deren obere Deckplatte seitlich überragt und die Flachtrichter schräge Seitenwände haben, und dass die untere Bodenplatte der Flachtrichter im Auftreffbereich der Körner eine nach oben weisende Wölbung bzw. einen nach oben weisenden Vorsprung aufweist.

Dabei kann vorgesehen sein, dass im Anschluss an die Breitsaatelemente eine Packerwalze vorgesehen ist.

Auch sieht die Erfindung gemäss einer bevorzugten Ausführungsform vor, dass die Breitsaatelemente sowohl hinsichtlich der Höhe als auch hinsichtlich ihres Anstellwinkels α stufenlos einstellbar ausgebildet sind.

Flachtrichter ähnlich denjenigen, die erfindungsgemäss verwendet werden, sind als solche beispielsweise aus der DE-U Nr. 6949822 sowie der US-A Nr. 3895589 bekannt, während in der DE-C Nr. 3034410 eine Scharform beschrieben ist, mittels welcher sich eine Breitsaat erzielen lässt; keine dieser vorgenannten Druckschriften zeigt jedoch die vorteilhafte Kombination der erfindungsgemäss beanspruchten Merkmale, wobei in der letztgenannten Druckschrift bei der dort beschriebenen Breitsäschar insbesondere die erfindungsgemäss vorgesehene Zuordnung der baulichen Abmessungen von oberer Deckplatte, unterer Bodenplatte und Seitenwänden der Flachtrichter nicht vorgesehen ist. Erst die Kombination der erfindungsgemässen Merkmale ermöglicht jedoch die erfolgreiche Lösung der obengenannten Aufgabe, indem nämlich das erfindungsgemäss vorgesehene Ablegen des Saatgutes in den abfliessenden Erdstrom im Zusammenwirken mit der beanspruchten Geometrie und Anordnung der Flachtrichter eine derart gleichmässige Breitenverteilung des Saatgutes hervorruft, dass sich beispielsweise bei einem gegenseitigen Abstand der Gänsefussschare von jeweils 5 bis 8 cm durch die erzielte Kornüberlappung der einzelnen Gänsefussschare eine gleichmässige Abdeckung und Tiefenablage ergibt. Die nicht bodenuntergreifende Anordnung der Gänsefussschare verhindert dabei zuverlässig jedwedes Verstopfen usw. auch auf nicht vorbereiteten Böden.

Nachstehend ist ein Ausführungsbeispiel anhand der Zeichnung im einzelnen erläutert. Dabei zeigen:

Fig. 1 eine schematische Draufsicht auf eine von einer Zugmaschine gezogene erfindungsgemässe Vorrichtung;

Fig. 2 eine perspektivische Ansicht eines einzelnen Breitsaatelementes;

Fig. 3 einen Längsschnitt durch ein Breitsaatelement, und

Fig. 4 einen Schnitt durch ein Breitsaatelement entlang der Linie A-B aus Fig. 3.

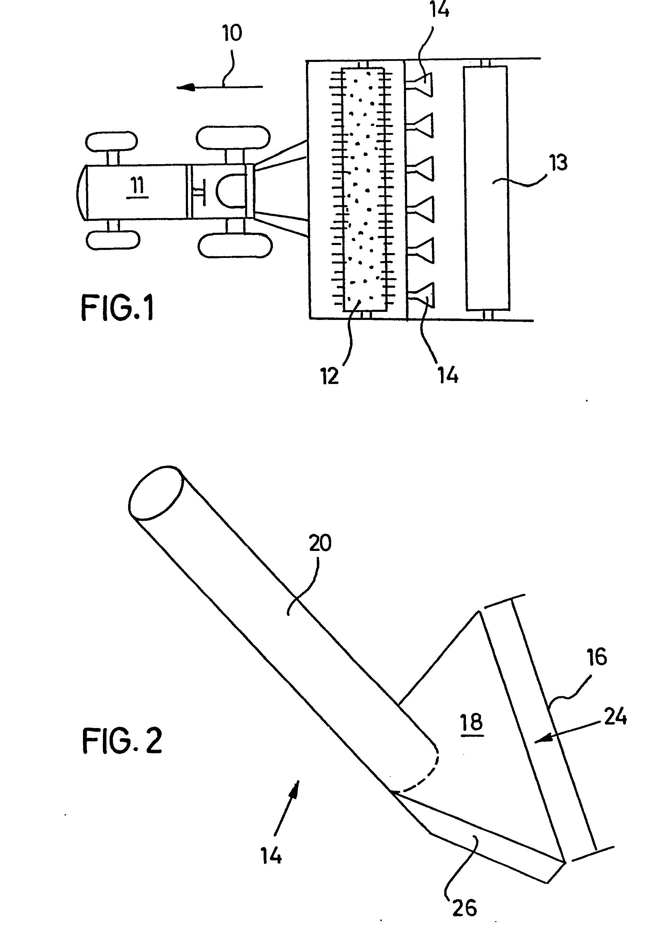

Gemäss Fig. 1 ist hinter eine Zugmaschine 11 eine erdstromerzeugende Einrichtung 12, beispielsweise ein Zinkenrotor, gehängt. Je nach Bodenverhältnissen können vor dem Zinkenrotor 12 auch, falls erforderlich, Bodenlockerungsschare vorgesehen sein. Der Zinkenrotor 12 erzeugt auf bekannte Weise einen abfliessenden Erdstrom.

In den Erdstrom tauchen erfindungsgemäss Breitsaatelemente 14 ein, die anhand der Fig. 2 bis 4 eingehender beschrieben werden. Nach Ablage der Körner in den abfliessenden Erdstrom wird im dargestellten Ausführungsbeispiel der Boden mittels eines geeigneten Nachläufergerätes, beispielsweise einer Walze 13 oder einer Packerwalze, bearbeitet. Der Fachmann erkennt, dass die Neuerung im wesentlichen darin besteht, dass anstatt von einfachen, in den Erdstrom ragenden Rohren Breitsaatelemente mit Flachtrichter verwendet werden. Die Vorteile einer solchen Anordnung der Breitsaatelemente in den Erdstrom sind vielfältig: Zum einen sichern die Breitsaatelemente mit ihren Flachtrichtern eine gleichmässige Tiefenablage und zum anderen sorgen sie dafür, dass die Bandbreite der Saat gemäss der Auslaufbreite 16 der Breitsaatelement-Flachtrichter aufgeweitet wird. Auch ist es möglich, durch die Verwendung der Breitsaatelemente, insbesondere auch durch die weiter unten beschriebenen besonderen Ausgestaltungen ihrer Geometrie, eine gleichmässigere Kornverteilung über das Saatband zu erzeugen, als es mit einfachen Samenleitungsrohren möglich ist. Gegenüber diesem Stand der Technik wird also sowohl eine verbesserte Breitenstreuung als auch eine genauere Tiefenablage der Körner erreicht.

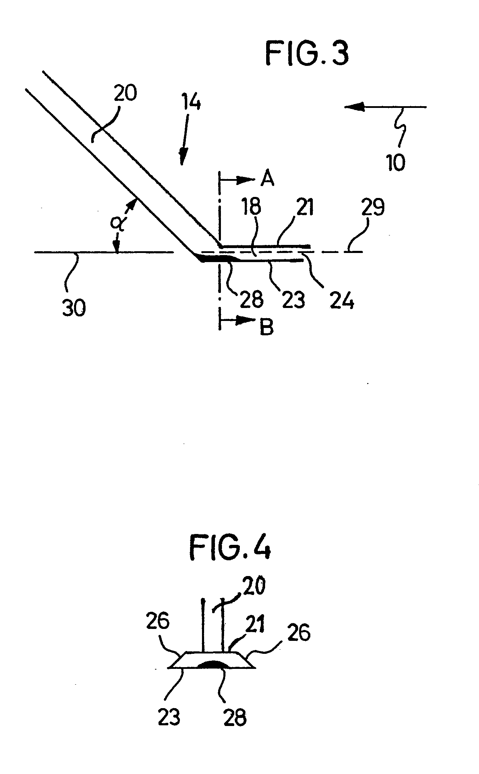

Gemäss Fig. 2 besteht ein Breitsaatelement im wesentlichen aus einem Kornzufuhrrohr 20 und einem Breitsaatelement-Flachtrichter 18. Die Körner gelangen durch das Kornzufuhrrohr 20 in den Flachtrichter 18 und verlassen diesen durch den Körnerauslauf 24. Seitenwände 26 verhindern ein seitliches Austreten der Körner aus dem Breitsaatelement-Flachtrichter 18. Fig. 3 zeigt das Breitsaatelement 14 im Schnitt. Das Kornzufuhrrohr 20 bildet mit der als horizontal angenommenen Bodenebene 30 den Anstellwinkel α, der in einem bevorzugten Ausführungsbeispiel der Erfindung je nach Bodenart einstellbar ist und gemäss Fig. 3 vorzugsweise 45° beträgt. Die Kornzuführung durch das Kornzufuhrrohr 20 in den Breitsaatelement-Flachtrichter 18 kann pneumatisch oder auch im freien Fall erfolgen. Bei einer pneumatischen Kornzuführung treffen die Körner nach Verlassen des Kornzufuhrrohres 20 mit so grossem Impuls auf die untere Bodenplatte 23 des Flachtrichters 18, dass sie von dort in alle Richtungen, insbesondere auch seitlich, abgelenkt werden. Fallen die Körner schwerkraftgespeist, also im freien Fall, durch das Kornzufuhrrohr 20 auf die untere Bodenplatte 23 des Flachtrichters 18, so reicht ihr Eigenimpuls erfahrungsgemäss nicht aus, um eine gute Breitenverteilung im beschriebenen Sinne zu bewirken. Es tritt eine Häufung der Körner in der Mitte des Körnerauslaufes 24 auf, was ersichtlich zu einer inhomogenen Flächenverteilung der Körner im erzeugten Saatband führt. Dieser Nachteil ist insbesondere dann auch bei pneumatischer Kornzufuhr erheblich, wenn Körner-Flachtrichter 18 eine grosse Auslaufbreite 16 (Fig. 2) haben sollen. Damit für die vorliegende Erfindung insbesondere auch bei Kornzuführung im freien Fall Breitsaatelement-Flachtrichter 18 mit relativ breiten Auslaufbreiten 16 Verwendung finden können, was ersichtlich erwünscht und vorteilhaft ist, sieht eine besondere Ausgestaltung des Erfindungsgedankens vor, auf der unteren Bodenplatte 23 im Auftreffbereich der das Kornzufuhrrohr verlassenden Körner eine Wölbung 28 anzubringen. Die Wölbung 28 ist gemäss den Fig. 3 und 4 in der Mitte der unteren Bodenplatte 23 angeordnet, so dass die auf die Wölbung 28 treffenden Körner seitlich nach links und rechts (bezogen auf die Särichtung 10) abgelenkt werden. Die beim Stand der Technik zu beklagende Häufung der Körner in der Mitte des Körnerauslaufes 24 wird also mit der erfindungsgemässen Wölbung 28 vermieden, wobei die Höhe und die Seitenwinkel der Wölbung 28 empirisch derart ausgelegt werden, dass eine homogene Kornverteilung über die gesamte Breite des Körnerauslaufes 24 erfolgt.

Die Fig. 3 und 4 offenbaren auch weitere vorteilhafte Ausgestaltungen der erfindungsgemäss verwendeten Breitsaatelemente: Die obere Deckplatte 21 der Breitsaatelement-Flachtrichter 18 überragt gemäss Fig. 3 die untere Bodenplatte 23, so dass der Körnerauslauf 24 gegen den abfliessenden Erdstrom geschützt ist. Auch ist gemäss Fig. 4 vorgesehen, die untere Bodenplatte 23 die obere Deckplatte 21 überragen zu lassen, damit dem den Breitsaatelement-Flachtrichter umfliessenden Erdstrom ein möglichst günstiges Strömungsprofil des Flachtrichters entgegengesetzt wird. Ersichtlich kann der Erdstrom über die auf diese Weise geschrägten Seitenwände 26 abfliessen.

## Patentansprüche

1. Breitsaatvorrichtung mit einem sich über die gesamte Vorrichtungsbreite erstreckenden, einen Erdstrom erzeugenden, in Fahrtrichtung rotierenden Bodenbearbeitungswerkzeug (12) mit horizontaler Drehachse, in dessen abfliessenden Erdstrom auf einer sich senkrecht zur Särichtung (10) erstreckenden Achse nebeneinander angeordnete Breitsaatelemente (14) nicht bodenuntergreifend hineinragen, die vorrichtungsfest einstellbar sind, dadurch gekennzeichnet, dass die Breitsaatelemente (14) am bodenseitigen Ende als Flachtrichter (18) ausgebildet sind, dass benachbarte Flachtrichter (18) einen lichten Abstand im Bereich von 0 bis 10 cm haben, dass die Auslaufbreite (16) der Flachtrichter (18) im Bereich von 5 bis 25 cm liegt, dass die obere Deckplatte (21) der Flachtrichter (18) deren untere Bodenplatte (23) in Richtung des Körnerauslaufes (24) überragt, dass die untere Bodenplatte (23) der Flachtrichter (18) deren obere Deckplatte (21) seitlich überragt und die Flachtrichter (18) schräge Seitenwände (26) haben, und dass die untere Bodenplatte (23) der Flachtrichter (18) im Auftreffbereich der Körner eine nach oben weisende Wölbung (28) bzw. einen nach oben weisenden Vorsprung aufweist.

2. Vorrichtung nach Anspruch 1, dadurch gekennzeichnet, dass im Anschluss an die Breitsaatelemente (14) eine Packerwalze vorgesehen ist.

3. Vorrichtung nach einem der Ansprüche 1 oder 2, dadurch gekennzeichnet, dass die Breitsaatelemente (14) sowohl hinsichtlich der Höhe als auch hinsichtlich ihres Anstellwinkels (α) stufenlos einstellbar ausgebildet sind.

## Claims

1. A broadcast sowing device having a rotating earth-working tool (12) which rotates in the direction of movement and around a horizontal axis of rotation, extends over the whole width of the device and produces a flow of earth, broadcasting elements (14) which are disposed one beside another on a shaft extending perpendicularly to the sowing direction (10) extending into the flow of earth discharging from the earth-working tool (12) without engaging below the ground, the broadcasting elements (14) being adjustable to be fast with the device, characterised in that the broadcasting elements (14) take the form of flat funnels (18) at the end near the ground, in that adjacent flat funnels (18) are disposed at an interval of from 0 to 10 cm to one another, in that the run-out width (16) of the flat funnels (18) is from 5 to 25 cm, in that the top cover plate (21) of the flat funnels (18) covers the bottom ground plate (23) thereof in the direction of grain discharge (24), in that the bottom ground plate (23) of the flat funnels (18) projects laterally beyond the top cover plate (21) and the flat funnels (18) have inclined side walls (26), and in that the bottom ground plate (23) of the flat funnels (18) has in the region of impingement of the grains an upwardly directed convexity (28) or an upwardly extending projection.

2. A device according to Claim 1, characterised in that a packer roll is provided after the broadcasting elements (14).

3. A device according to Claim 1 or 2, characterised in that the broadcasting elements (14) are steplessly adjustable in height and in their angle (α) of attack.

## Revendications

1. Appareil de semis à la volée comportant un outil de travail du sol (12), tournant dans le sens de la marche et d'axe de rotation horizontal, produisant un courant de terre, et s'étendant sur toute la largeur de l'appareil, des éléments de semis à la volée (14), disposés côte à côte sur un axe s'étendant perpendiculairement à la direction de semis, faisant saillie dans le courant de terre qui se déverse, mais sans s'engager dans le sol, et qui sont réglables en position fixe sur l'appareil, caractérisé par le fait que les éléments de semis à la volée (14) sont agencés, à l'extrémité côté sol, en forme d'entonnoir plat (18), que, entre entonnoirs plats (18) voisins, existe un intervalle compris entre 0 et 10 cm, que la largeur de sortie (16) par l'entonnoir plat (18) est comprise entre 5 et 25 cm, que la plaque de recouvrement supérieure (21) de l'entonnoir plat (18) fait saillie par rapport à sa plaque de sol inférieure (23) en direction de la sortie des grains (24), que la plaque de sol inférieure (23) de l'entonnoir plat (18) fait saillie latéralement par rapport à sa plaque de recouvrement supérieure (21) et les entonnoirs plats (18) possèdent des parois latérales (26) inclinées, et que la plaque de sol inférieure (23) de l'entonnoir plat (18) présente, dans la zone d'impact des grains, un bombement (28) dirigé vers le haut ou une saillie dirigée vers le haut.

2. Appareil selon la revendication 1, caractérisé par le fait que, à la suite des éléments de semis à la volée (14), est prévu un rouleau de tassement.

3. Appareil selon l'une des revendications 1 ou 2, caractérisé par le fait que les éléments de semis à la volée (14) sont réglables de façon continue aussi bien en hauteur qu'en angle d'incidence ($\alpha$).

FIG.1

FIG. 2

# FIG.3

# FIG.4